# EUROPEAN PATENT SPECIFICATION

(11) **EP 2 787 130 B1**
(45) Date of publication and mention of the grant of the patent: **15.09.2021**
(21) Application number: 14160062.7
(22) Date of filing: 14.03.2014
(51) Int. Cl.: E02F 9/26, F02D 41/22, G07C 5/00

(54) **AUTOMATED SERVICE SYSTEM OF A WORK MACHINE AND METHOD THEREOF**
AUTOMATISIERTES SERVICESYSTEM EINER ARBEITSMASCHINE UND VERFAHREN DAFÜR
SYSTÈME DE SERVICE AUTOMATIQUE D'UNE MACHINE DE TRAVAIL ET PROCÉDÉ ASSOCIÉ

(30) Priority: 01.04.2013 US 201361807034 P
(43) Date of publication of application: 08.10.2014
(73) Proprietor: Deere & Company, Moline, IL 61265 (US)
(72) Inventor: LANCE, Sherlock R., Asbury, IA Iowa 52002 (US); JASON, Knipper G., Durango, IA Iowa 52039 (US); BRECKE, Jesse M., Platteville, WI Wisconsin 53818 (US)
(74) Representative: Millburn, Julie Elizabeth

(56) References cited:
- WO-A1-2012/060355
- WO-A1-2013/062569
- US-A- 5 381 874
- US-A- 5 382 942
- US-A1- 2008 277 188
- US-A1- 2011 040 440
- US-A1- 2012 125 442
- US-A1- 2012 215 379
- US-A1- 2012 245 760

## Description

### Field of the Disclosure

The present disclosure relates to a system for maintaining a work machine, and in particular to an automated service system for performing and displaying an analysis of the work machine.

### Background

With many conventional work machines, such as an excavator, an operator is required to perform routine maintenance and service checks each time before the machine is operated. Each of these checks is manually performed, and in some instances, can take the operator an hour or more to complete. When a machine is operating on a daily basis, the operator is required to perform every maintenance and service check daily. Moreover, if there are multiple shifts during the day, each operator must perform the maintenance and service checks at the beginning of their respective shift. The frequency of the checks can be dictated by governmental safety regulations. For example, in mining applications, machine operators or service technicians are required to record and track the daily maintenance and service checks to meet safety guidelines. As a result, the operator or service technician can spend a significant amount of time each day performing these manual checks before the machine can be operated.

Besides the safety and condition of the machine, machine operators are often required to climb to a high distance on the machine to reach fluid levels and complete many of the tasks. Due to safety concerns, machines are often designed and built with handrails and guardrails to protect the operator and service technicians when performing these checks. This, however, can add significant cost to the machine.

Thus, while the maintenance and service checks can ensure that the machine is properly maintained and is safe to operate, these manual checks nevertheless can reduce machine productivity for a given shift. It would therefore be desirable to provide a better means for performing these maintenance and service checks that allows the operator to spend more time operating the machine. In addition, it would be desirable to remove or limit the number of manual checks to be performed, and also provide a a better means for tracking the daily maintenance and service checks.

US 2012/245760 discloses a vehicle monitoring device that includes an input unit for instructing, a display unit to display the detection content, a memory, and a controller that causes the display unit to display current detection content of the monitoring item registered in the memory.

WO 2013/062569 discloses a riding lawn mower, with an illuminating element around the perimeter of a display screen, configured to alert the operator to the display screen that is indicating a predefined condition.

US 2012/125442 relates to large earth moving equipment and the fluids used therein must be maintained at appropriate levels to avoid damaging the mechanical components; the said fluid level monitoring system includes a control panel with input devices, and a plurality of indicators, corresponding to one of the input devices, to provide visual displays of fluid level statuses for the monitored fluids.

WO 2012/060355 discloses a construction machine status notification device with which an operator can know promptly that an engine shut-off switch is in the off state; the notification device comprises a key switch, an engine shut-off switch, a control unit which carries out a control which notifies a notification unit that the engine shut-off switch is in the off state.

### Summary

In an exemplary embodiment of the present disclosure, a method is provided for automatically performing maintenance checks on a work machine. The method includes providing a display monitor in a cab of the machine, an ignition switch for starting the machine, a plurality of sensing devices, and a controller for controlling the machine. The method also includes detecting an activation of the ignition switch, detecting a current condition of the machine with each of the plurality of sensing devices in response to detecting an activation of the ignition switch, and comparing the result of each detected condition to a corresponding threshold. In addition, the method includes displaying, in response to detecting an activation of the ignition switch, the result of each detected condition on the display monitor relative to the threshold and providing an acknowledgement button on the display monitor in response to comparing the result of each detected condition, wherein triggering of the acknowledge button confirms a review of the displayed result of each detected condition; restricting further activation of the ignition switch until the acknowledge button is triggered; and wherein further activation of the ignition switch is required to start the machine after the acknowledge button is triggered.

In one aspect, the method includes detecting a fluid level or fluid quality with at least one of the sensing devices. In another aspect, the method includes providing an automatic greasing system coupled to the machine and displaying an automatic greasing activation button on the display monitor with the result of each detected condition. In a different aspect, the method includes displaying the result of each detected condition and the acknowledgement button on a single screen on the display monitor. Moreover, the displaying step comprises displaying diagnostic trouble-shooting codes on the display monitor. In a related aspect the method includes detecting an active diagnostic trouble-shooting code with one of the plurality of sensing devices, displaying the active diagnostic trouble-shooting code on the display monitor, and storing the diagnostic trouble-shooting code within a memory unit of the controller.

In a further related aspect, the method includes triggering an alert when one detected condition does not satisfy its corresponding threshold and displaying the diagnostic symbol on the display monitor when the alert is triggered. In yet a further aspect, the method can include determining fluid quality based on its density, dielectric, and viscosity, comparing the fluid density, dielectric, and viscosity to a first threshold and a second threshold, and displaying the current fluid level and quality in a single screen on the display monitor. The fluid quality is displayed on the display monitor in the form of a first visual indicator, a second visual indicator, and a third visual indicator, where the first visual indicator corresponds to satisfying the first and second thresholds, the second visual indicator corresponds to satisfying only one of the first and second thresholds, and the third visual indicator corresponds to satisfying neither the first nor second thresholds.

In another embodiment, a method is provided for controlling the ignition of a work machine, the work machine including an engine, a cab with a display monitor, an ignition switch for igniting the engine, a controller, and a plurality of sensing devices. The method includes, measuring a plurality of different current conditions of the machine detected with each of the plurality of sensing devices, electrically communicating the result of each condition with the controller, comparing the result of each condition with a threshold, and displaying each result on the display monitor, where each result is displayed in a single screen and is shown relative to the threshold.

In one aspect, the method includes measuring a current fluid level relative to a minimum level and maximum level, measuring a current fluid quality based on its density, dielectric, and viscosity, comparing the current fluid density, dielectric, and viscosity to a first threshold and a second threshold, and displaying the current fluid level relative to the minimum and maximum levels and the current fluid quality relative to the first threshold and second threshold. The fluid level and fluid quality results are shown in a single screen on the display monitor. The current fluid quality is displayed in the form of a first visual indicator, a second visual indicator, and a third visual indicator, where the first visual indicator corresponds to satisfying the first and second thresholds, the second visual indicator corresponds to satisfying only one of the first and second thresholds, and the third visual indicator corresponds to satisfying neither the first nor second thresholds.

In another aspect, the method can include providing an automatic greasing system coupled to the machine and displaying an automatic greasing activation button on the display monitor with the result of each detected condition. In a yet another embodiment, the displaying step comprises displaying diagnostic trouble-shooting codes on the display monitor. In a different aspect, the method can include detecting an active diagnostic trouble-shooting code with one of the plurality of sensing devices, displaying the active diagnostic trouble-shooting code on the display monitor, and storing the diagnostic trouble-shooting code within a memory unit of the controller. In a further aspect, the method can include triggering an alert when at least one result does not satisfy its corresponding threshold and displaying a diagnostic symbol on the display monitor when the alert is triggered. In a related aspect, the method can include disabling the engine from igniting when at least one of the detected conditions does not satisfy its corresponding threshold.

In a different embodiment of the present disclosure, a machine includes a frame and an engine coupled to the frame, a ground-engaging mechanism positioned to support the frame, and a cab coupled to the frame. The cab includes a display monitor for operating the machine and an ignition control for starting the engine, where the display monitor is configured to display a maintenance check screen. The machine further includes a controller disposed in electrical communication with the monitor and ignition control and a plurality of sensing devices electrically coupled to the controller. Each of the plurality of sensing devices is configured to detect a fluid level, fluid condition, or a diagnostic condition of the machine; an acknowledgement button and an activation button, the acknowledgement button being operable once the output signals are displayed on the maintenance check screen and the activation button configured to activate an automatic greasing function; wherein upon activation of the ignition control, the controller automatically receives signals from each of the plurality of sensing devices and sends output signals to the display monitor and the display monitor is structured to display each of the output signals on the maintenance check screen, wherein the acknowledgement button is operable once the output signals are displayed on the maintenance check screen and the ignition control is inoperative once the acknowledgement button is operable and has not been triggered.

In one aspect of this embodiment, the plurality of sensing devices includes an air filter restriction sensor, an engine coolant level sensor, an engine oil level sensor, a heavy duty water in fuel filter sensor, a water in fuel filter sensor, a pilot oil filter restriction sensor, a hydraulic oil filter restriction sensor, a hydraulic oil level sensor, and a diesel fuel level sensor. In a different aspect, the machine includes an automated greasing assembly coupled to the frame and configured to dispense grease at various locations on the machine. The automated greasing system is operably controlled by the controller. An activation button is also displayed on the maintenance check screen such that an actuation of the activation button triggers a signal to the controller to control an automated greasing function from the automated greasing assembly.

In a further aspect, the maintenance check screen is structured to display a plurality of gauge indicators for providing a visual indication of at least diesel fuel level, engine oil level, engine coolant level, and hydraulic oil level. The screen can also display a plurality of visual indicators for indicating the current density, dielectric and viscosity for at least diesel fuel, engine oil, engine coolant level, and hydraulic oil level and a display of any active diagnostic trouble-shooting codes and any stored diagnostic trouble-shooting codes. The screen can further display a plurality of diagnostic alerts configured to display at least one of two states, a first state being indicative of a satisfactory condition and a second state being indicative of an unsatisfactory state.

### Brief Description of the Drawings

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1 is a side view of an excavator;
Fig. 2 is a top view of an exemplary work machine having a plurality of locations along thereof for performing a series of maintenance checks;
Fig. 3 is an exemplary control schematic of the work machine of Fig. 2;
Fig. 4 is a schematic view of an exemplary maintenance check screen on a display monitor; and
Fig. 5 is a schematic view of an exemplary display monitor displaying a main screen.

Corresponding reference numerals are used to indicate corresponding parts throughout the several views.

### Detailed Description

The embodiments of the present disclosure described below are not intended to be exhaustive or to limit the disclosure to the precise forms disclosed in the following detailed description. Rather, the embodiments are chosen and described so that others skilled in the art may appreciate and understand the principles and practices of the present disclosure.

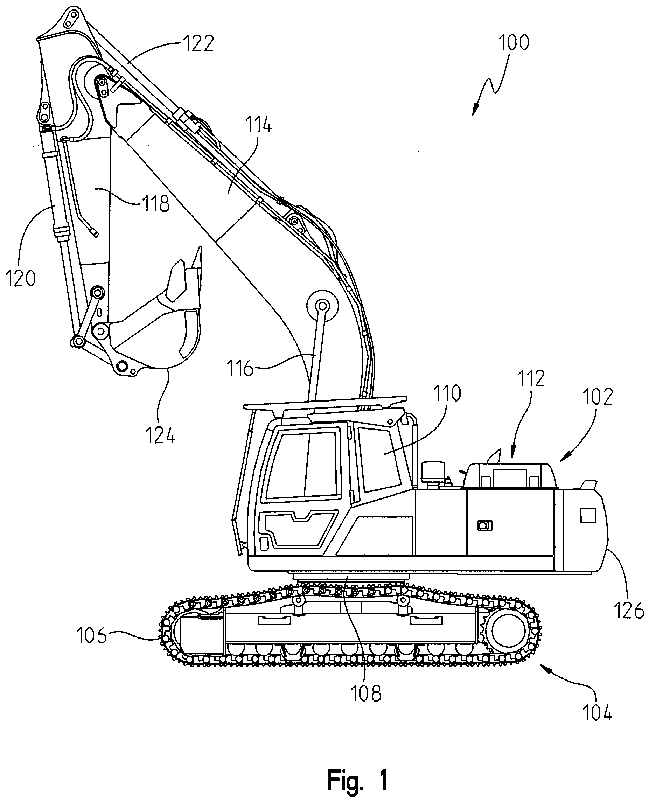

An exemplary embodiment of a work machine is shown in Figure 1. The machine is embodied as an excavator 100. The present disclosure is not limited, however, to an excavator and may extend to other work machines that have one or more service doors. As such, while the figures and forthcoming description may relate to an excavator, it is to be understood that the scope of the present disclosure extends beyond an excavator and, where applicable, the term "machine" or "work machine" will be used instead. The term "machine" or "work machine" is intended to be broader and encompass other vehicles besides an excavator for purposes of this disclosure.

Referring to Figure 1, the excavator 100 includes an upper frame 102 pivotally mounted to an undercarriage 104. The upper frame 102 can be pivotally mounted on the undercarriage 104 by means of a swing pivot 108. The upper frame 102 is rotatable about 360° relative to the undercarriage 104 on the swing pivot 108. A hydraulic motor (not shown) can drive a gear train (not shown) for pivoting the upper frame 102 about the swing pivot 108.

The undercarriage 104 can include a pair of ground-engaging tracks 106 on opposite sides of the undercarriage 104 for moving along the ground. Alternatively, the excavator 100 can include wheels for engaging the ground. The upper frame 102 includes a cab 110 in which the machine operator controls the machine. The cab 110 can include a control system (not shown) including, but not limited to, a steering wheel, a control level, control pedals, or control buttons. The operator can actuate one or more controls of the control system for purposes of operating the excavator 100.

The excavator 100 also includes a large boom 114 that extends from the upper frame 102 adjacent to the cab 110. The boom 114 is rotatable about a vertical arc by actuation of a pair of boom cylinders 116. A dipper stick or arm 118 is rotatably mounted at one end of the boom 114 and its position is controlled by a hydraulic cylinder 122. The opposite end of the boom 114 is coupled to the upper frame 102. At the end opposite the boom 114, the dipper stick or arm 118 is mounted to an excavator bucket 124 that is pivotable relative to the arm 118 by means of a hydraulic cylinder 120.

The upper frame 102 of the excavator 100 includes an outer shell cover to protect an engine assembly 112. At an end opposite the cab 110, the upper frame 102 includes a counterweight body 126. The counterweight 126 comprises a housing filled with material to add weight to the machine and offset a load collected in the bucket 124. The offset weight can improve the digging performance of the excavator 100.

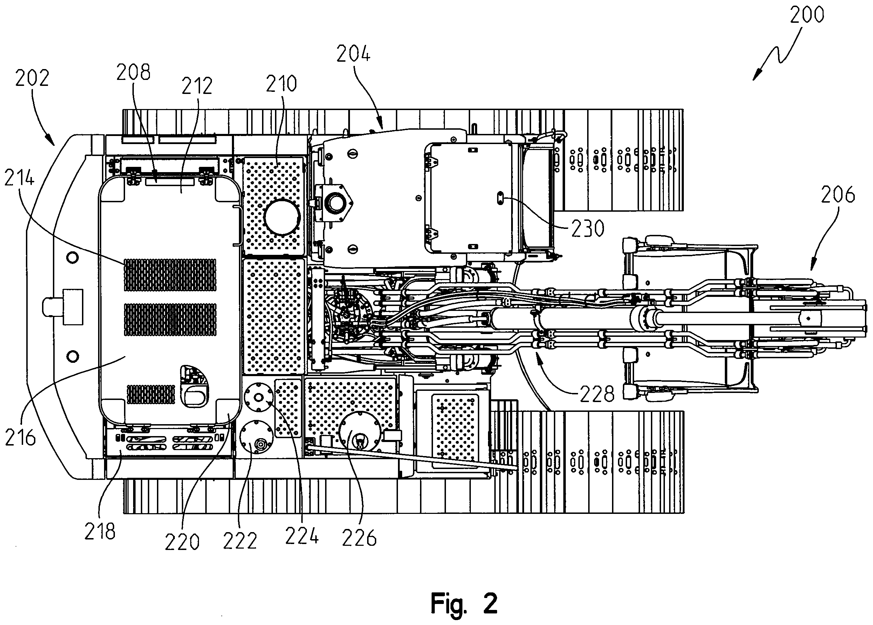

In Figure 2, an exemplary machine 200 is shown and includes a frame 202, a cab 204 mounted to the frame 202, and a work tool or implement 206 coupled to the frame 202 for performing a desired function. The machine 200 can include a ground engaging mechanism such as one or more wheels or a set of tracks as shown in Fig. 1. The cab 204 can include an operator's seat positioned therein for an operator to sit while operating the machine 200. Moreover, user controls (not shown) such as a steering wheel, shift lever, joysticks, buttons, switches, etc. can also be provided in the cab 204. A display monitor 230 can also be positioned in the cab 204 that includes one or more user controls.

Although not shown in Fig. 2, an ignition switch or trigger can be positioned in the cab 204 for starting an engine assembly 208. The machine 200 can include one or more engine assemblies 208 for producing power to control movement and operation of the machine 200. A transmission (not shown) or other power-transferring mechanism can be coupled to the engine assembly 208 for transferring power from the engine assembly 208 to the ground engaging mechanism.

As described above, an operator is often tasked with performing a series of maintenance checks on the machine 200 each day or before a shift. In most instances, these maintenance checks are manually performed by the operator. In Fig. 2, however, many of these maintenance checks require an operator to access locations within the machine 200 that are either difficult to obtain access to or require significant time to perform the check. To improve upon the conventional practice of performing maintenance checks, the machine 200 in Fig. 2 provides an automated system for performing many, if not all, of the necessary checks. For example, sensors, switches, and other sensing devices can be positioned along the machine for performing these checks.

As described above, the machine 200 can include a plurality of maintenance checks. For instance, some of the checks require an air filter restriction check 210, an engine coolant check 212, an engine oil check 214, a heavy duty water in fuel check 216, a water in fuel check 218, a pilot oil filter restriction check 220, a hydraulic oil filter check 222, a hydraulic oil level check 224, and a diesel fuel level check 226. There may be additional maintenance checks as well. With other machines, for instance, different fuel level checks may be required. Some machines may include two or more engine assemblies 208 for providing power to the ground engaging mechanism, and therefore additional maintenance checks may be required for each additional engine assembly 208. Moreover, the machine 200 can include an automated greasing system 228 that operably dispenses grease at desired locations along the machine 200 (e.g., joints, pivots, etc.).

As shown in Fig. 2, each of these maintenance checks are positioned at various locations on the machine 200, and therefore in a conventional manual check system the operator would constantly be moving along the perimeter thereof and to various heights along the machine 200 to complete each maintenance check. However, by incorporating different fluid sensors, pressure sensors, leveling sensors, electrical switches, and the like, the machine 200 can be structured to allow for a substantially automated maintenance check system.

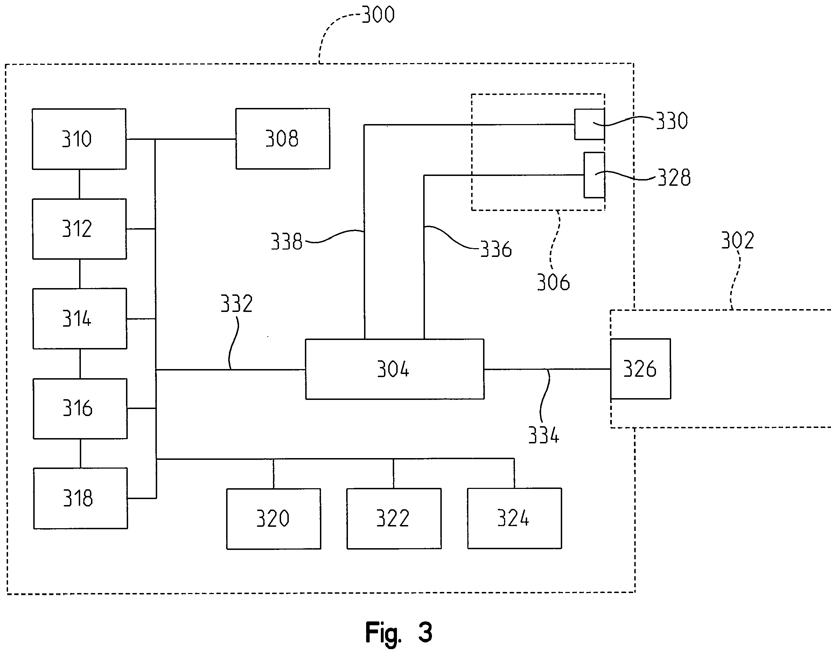

Turning to Fig. 3, another exemplary machine 300 is shown. The machine 300 can be structured to include a work implement or tool 302 coupled thereto for performing a desired machine function. A cab 306 is also coupled or mounted to the machine 300 such that a machine operator can control various functions of the machine 300 from the cab 306. In Fig. 3, a portion of a control system is shown of the machine 300. The control system can include at least one controller 304 for controlling the operation of the machine 300. The controller 304 can be microprocessor-based and include a memory unit. In this instance, the memory unit can include instructions stored therein that are executable by the controller 304 to control the operation of the machine 300. It will be understood, however, that this disclosure contemplates other embodiments in which the controller 304 is not microprocessor-based, but is configured to control operation of the machine 300 based on one or more sets of hardwired instructions and/or software instructions stored in the memory unit.

Although not shown specifically in Fig. 3, the machine 300 can include one or more engines for generating power to drive the machine 300. The one or more engines can be started by triggering an ignition switch 330 from the cab 306. Likewise, a display monitor 328 can be positioned in the cab 306 for showing various operating aspects of the machine 300 (e.g., speed, range, fluid levels, mileage, hours of operation, etc.). The display monitor 328 can also be structured to display diagnostic trouble-shooting codes, maintenance check items, alerts, etc. In doing so, the display monitor 328 and ignition switch 330 can be electrically coupled to the controller 304 via a first communication link 336 and a second communication link 338, respectively. In one aspect, these communication links may be broadcast over a network such as a CAN network, for example. In any event, the controller 304 can be structured to receive inputs and outputs and communicate the same with the display monitor 328 in the cab 306.

The machine 300 can also be structured to include an automated maintenance check system. The automated maintenance check system can be in electrical communication with the controller 304, which in turn can send output signals to the display monitor 328 for purposes of displaying the status of these checks with the operator in the cab 306. In this embodiment, the automated maintenance check system can monitor and provide current status updates for air filter flow, engine coolant level and quality, engine oil level and quality, heavy duty water in fuel flow, water in fuel flow, pilot oil filter flow, hydraulic oil filter flow, hydraulic oil level and quality, and diesel fuel level and quality. There can be other checks for different machines, and those shown and discussed in this disclosure are not intended to comprise an exhaustive list. Rather, this disclosure provides a means for automating the maintenance check system and providing a mechanism for presenting the current status of each check on the display monitor in the cab for the operator to review, regardless of the number and type of maintenance checks required for a particular machine.

In order to automate the above-mentioned maintenance checks in the machine 300, a plurality of sensing devices can be electrically coupled to the controller 304 and each sensing device can be structured to perform one or more maintenance checks. For instance, the machine 300 can include an air filter restriction sensor 308 that is electrically coupled to the controller 304 via communication link 332. The sensor 308 can be structured to measure a pressure difference, for example, across the air filter and determine whether the filter is properly filtering debris and other contaminants.

The sensor 308 can be continuously monitoring the pressure differential, or it can be triggered by the controller 304 to perform a pressure differential measurement and communicate the result to the controller 304 over link 332. In this sense, the controller 304 can be programmed to automatically send a request signal to the air filter restriction sensor 308 each time the ignition switch 330 is enabled. Moreover, the controller 304 may include an integrated timer or clock (not shown) that is triggered once the ignition switch 330 is disabled. If the operator enables the ignition switch 330, the controller 304 can disable the timer or clock, and if the elapsed time between disable and enable is greater than a predefined timing threshold, the controller 304 can send the request to the air filter restriction sensor 308. This logic can be stored in the memory unit of the controller 304 such that the controller 304 sends similar request signals to one or more of the plurality of sensing devices.

The other sensing devices can include an engine coolant sensor 310, an engine oil sensor 312, a heavy duty water in fuel sensor 314, a water in fuel sensor 316, a pilot oil filter restriction sensor 318, a hydraulic oil filter restriction sensor 320, a hydraulic oil level sensor 322, and a diesel fuel level sensor 324. Each of these sensors can be electrically coupled to the controller 304 via communication link 332. The engine coolant sensor 310, engine oil sensor 312, hydraulic oil level sensor 322, and diesel fuel level sensor 324 can include one sensor for detecting the level of the respective fluid and a second sensor disposed in the fluid for detecting the quality thereof. For instance, the second sensor can detect the density, dielectric, and viscosity of the fluid. As a result, the sensors can detect the level and quality of the fluid and communicate this information to the controller 304 for displaying on the display monitor 328 of the machine 300.

The machine 300 can also include an automated greasing system 326. Automated greasing systems are known in the art, and any known greasing system may be operable coupled to the machine 300 for greasing joints, fittings, etc. The automated greasing system 326 can also be electrically coupled to the controller 304 via another communication link 334, as shown in Fig. 3. If an operator desires to perform an automated greasing operation, the operator can trigger a control to instruct the controller 304 to activate the automated greasing system 326. In at least one instance, this control can be initiated from the display monitor 328 in the cab 306.

In accordance with the present disclosure, the controller 304 can perform an automated maintenance check of the machine 300. This can be triggered, for example, once the machine operator triggers the ignition switch 330 in the cab 306. Once the ignition is triggered, a signal can be communicated over link 338 to alert the controller 304 that the ignition switch 330 has been triggered. In turn, the controller 304 can be instructed to request status checks from each of the plurality of sensing devices. As such, each sensing device can output a signal corresponding to a measurement or detection to the controller over link 332. The controller 304 can communicate with the display monitor 328 to display the results of each measurement or detection on a screen for review by the operator. In effect, this can reduce a significant amount of time otherwise required by conventional, manual maintenance checks. It also can improve the safety of the machine by removing the operator from having to perform each maintenance check. It is further possible for any diagnostic trouble-shooting code (DTC) to be communicated with the controller 304, which can display a designated DTC on the display monitor 328 for the operator to review. This can be related to a safety issue (e.g., a seat belt is not securely fastened), a maintenance issue (e.g., low engine oil), etc.

In one exemplary aspect of this embodiment, the controller 304 can include a plurality of predefined threshold values stored in its memory unit. These threshold values can be in the form of a minimum value and maximum value (i.e., a preferred range) or a single threshold value. Each of the plurality of threshold values can correspond to one or more of the maintenance checks (e.g., an engine oil level threshold). Moreover, the plurality of threshold values can be stored in one or more lookup tables, profile curves, etc. Some of these threshold values may be based on fluid temperature, operating condition, mileage, operating time, time of use, etc. In any event, the controller 306 can include executable instructions stored in its memory unit for being able to retrieve the appropriate threshold value or values for each of the maintenance checks performed by the machine 300.

In doing so, the controller 304 can be structured to receive a measurement or detection signal from each of the plurality of sensing devices. Depending on the signal and which of the plurality of sensing devices sent the signal, the controller 304 can retrieve the appropriate threshold value or values from its memory unit and do a comparison between the signal and the corresponding threshold value or values. In one aspect, the controller 304 can further be structured to store the result of each comparison over a period of time (e.g., collect a history of maintenance check measurements and store said values for a period of time). The operator or owner of the machine 300 may be able to edit the period of time by which these values are stored by the controller 304. As a result, the operator, owner, or other user may be able to retrieve the history of maintenance check results over any desired period of time.

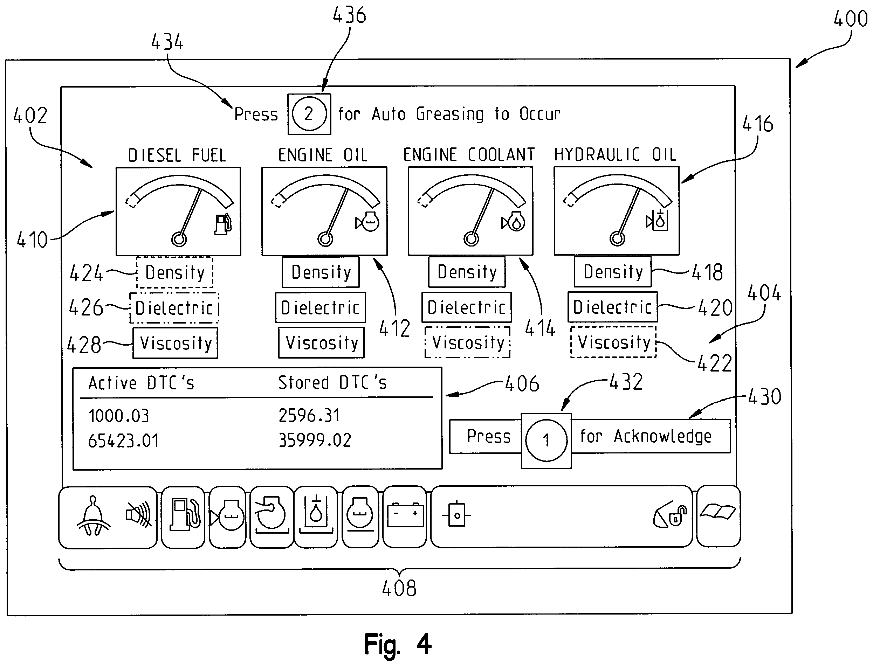

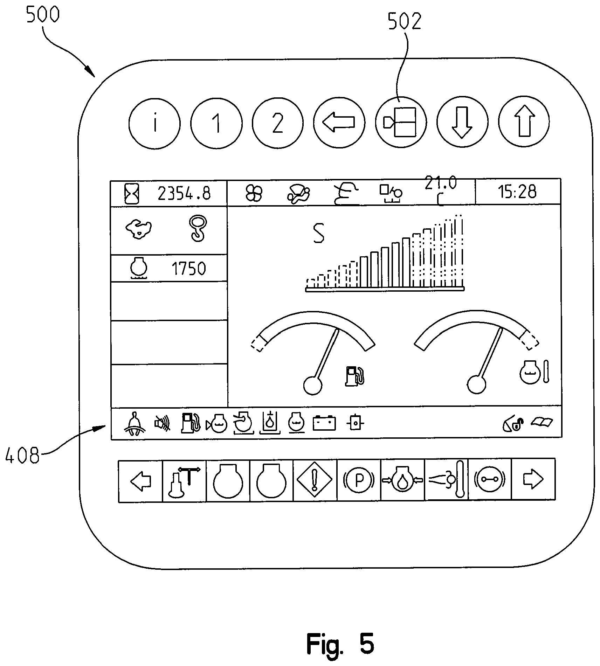

The controller 304 can also send the results of each measurement or detection to the display monitor 328 so an operator or owner can ensure the machine 300 is in proper working condition. An example of how this can be formatted in shown in further detail in Figs. 4 and 5. Referring to Fig. 5 first, a monitor display 500 can be provided in the cab similar to the monitor 328 of Fig. 3. Here, the monitor display 500 can display a plurality of menu options, an operating screen, measurement gauges, odometer or operating time, speeds, etc. In this embodiment, the monitor display 500 can provide a menu option button 502 in the form of a touchscreen button whereby the operator can trigger or press the button 502 to reach a second screen that provides a list of menu options. One of the menu options can include a maintenance check screen that visually provides maintenance check results received from the controller 304. In an alternative embodiment, an operator can trigger or press the menu option button 502 to automatically load and display the maintenance check screen.

In Fig. 4, an exemplary maintenance check screen 400 is shown. This display screen 400 is not intended to be limiting, and it is to be understood that the features shown in this display 400 may be displayed in various arrangements. In addition, the features shown in the display screen 400 may depend on the type of machine and the type and quantity of maintenance checks that are automatically performed. For instance, one or more of the maintenance checks shown in Fig. 4 may be manually performed on some machines, whereas in other machines one or more of these checks may not be performed at all. Moreover, other machines may require additional maintenance checks that can be automatically performed by the automated system, and therefore the display screen 400 may be modified to include these additional checks.

In the embodiment shown in Fig. 4, the display screen 400 can be structured to display a plurality of fluid gauges 402, a plurality of fluid quality conditions 404, a plurality of diagnostic trouble-shooting codes 406, and a plurality of diagnostic alerts 408. The plurality of fluid gauges 402 can include a diesel fuel level gauge 410, an engine oil level gauge 412, an engine coolant level gauge 414, and a hydraulic oil level gauge 416. As shown, the gauges can display a current fluid level with respect to various threshold ranges (e.g., one visual indicator can be color-coded red to indicate a low fluid level and a second visual indicator can be color-coded green to indicate a normal or satisfactory fluid level). Although these fluid levels are shown in the form of gauges, other means such as digital displays can be used as well. The current fluid level can correspond to the measurement or detection signal sent from the respective sensing device to the controller 304, as described with reference to Fig. 3.

The plurality of fluid quality conditions 404 shown in the display screen 400 can provide an operator with an understanding of the current condition or quality of the fluid. The condition or quality of the fluid can be measured in terms of its density, dielectric, and viscosity. As described above, the controller 304 can have threshold values stored therein for each of these quality measurements, and as such the display screen 400 can display each of the plurality of fluid quality conditions 404 in terms of its relationship to its respective threshold value. For instance, the quality of hydraulic oil in the machine can be displayed with respect to its density 418, dielectric 420, and viscosity 422. The same can be true for the diesel fuel, engine oil, and engine coolant.

Moreover, the display screen 400 can provide a visual indication of whether the measured fluid quality or condition satisfies a corresponding threshold condition or value. In Fig. 4, for example, the diesel fuel density is shown with a first color-coded box 424 representative of a first condition. Similarly, the diesel fuel dielectric is shown with a second color-coded box 426 representative of a second condition, and the diesel fuel viscosity is shown with a third color-coded box 428 representative of a third condition. In this embodiment, the first condition can refer to an undesirable condition, the second condition can refer to an intermediate condition, and the third condition can refer to a satisfactory condition. While these conditions are color-coded or visual indicative of the fluid quality, it is also possible in other embodiments for these to provide digital measurements, graphical data (e.g., like the gauges), or any other known manner for displaying the fluid quality relative to a threshold value or values.

The diagnostic trouble-shooting code (DTC) display 406 can display one or more active DTC's and one or more stored DTC's. The active DTC's can be codes that are logged due to an active condition, whereas the stored DTC's may refer to a previous triggered code that is no longer active. The stored DTC's can provide an operator or technician with a history of past DTC's so that if a code reoccurs the operator or technician may be able to service the appropriate item to remove the problematic condition (e.g., faulty electrical switch or connection).

The plurality of diagnostic alerts 408 can be triggered when one of the maintenance check items does not meet its predefined threshold. For instance, if the air flow through the air flow filter is restricted due to debris and other contaminants, the air filter sensor 308 may detect this condition due to a increased pressure differential across the filter. In this instance, the sensor 308 can communicate this measured pressure differential to the controller 304 via communication link 332, and the controller 304 can compare the measured pressure differential to one or more threshold values. Based on this comparison, the controller 304 can trigger one of the plurality of diagnostic alerts 408 on the display screen 400 to indicate a possible problem with the air filter. In one aspect, the corresponding diagnostic alert 408 may be illuminated on the display screen 400 to indicate the possible problem. Alternatively, the diagnostic alert 408 may flicker or blink when a possible problem is detected. Other means for providing a visual indicator to the operator may be incorporated into the display and functionality of the plurality of diagnostic alerts 408. Other diagnostic alerts 408 may provide visual indicators based on measurements and detections with respect to the heavy duty water in fuel sensor 314, water in fuel sensor 316, pilot oil sensor 318, and hydraulic oil filter sensor 320.

The display screen 400 can also provide a first instruction 430 and a second instruction 434. The first instruction 430 can include a first trigger button 432 and the second instruction 434 can include a second trigger button 436. The first instruction 430 can instruct the operator to acknowledge that each maintenance check displayed on the display screen 400 has been reviewed or evaluated. By pressing or engaging the first trigger button 432, the operator can affirmatively indicate that the operator has reviewed each item displayed on the maintenance check display screen 400. This may or may not require the operator to correct or service items on the display screen 400 that need serviced (e.g., adding diesel fuel until the diesel fuel level meets its threshold limit). The second instruction 434 can indicate to the operator the ability to perform an automated greasing operation. By triggering the second trigger button 436, the automated greasing system 326 on the machine 300 can be activated to carry out the greasing operation.

In one non-limiting example, the operator can enable or trigger the ignition switch 330. In doing so, each of the plurality of sensing devices can send measurement signals to the controller 304, which can compare each signal to a corresponding threshold value or values, and display the results on the display monitor 328. Upon triggering the ignition switch, the maintenance display screen 400 can be automatically displayed on the monitor 328. The results of each measurement or detection can similarly be displayed on the display screen 400. Once the operator has reviewed each maintenance check item on the screen 400, the operator can trigger the first trigger button 432 to acknowledge having reviewed the screen 400. Once the first trigger button 432 is actuated, the engine can then be cranked so that the machine is able to operate.

In another non-limiting example, if one or more of the maintenance check items requires service, there is an active DTC, or a diagnostic alert is triggered, the controller 304 can be programmed to disable the engine from cranking until the service item, DTC, or alert is deactivated or satisfied. This may be desirable to prevent the machine from operating when a fluid level is too low, for example, or there is a plugged filter. In other words, this functionality can improve machine durability and performance. It may further be possible for this feature to be enabled or disabled through software instructions stored in the controller 304 such that a machine operator, owner, or technician can adjust the setting as necessary.

While exemplary embodiments incorporating the principles of the present disclosure have been disclosed hereinabove, the present disclosure is not limited to the disclosed embodiments. Instead, this application is intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A method of automatically performing maintenance checks on a work machine, comprising:
providing a display monitor in a cab of the machine, an ignition switch for starting the machine, a plurality of sensing devices, and a controller for controlling the machine;
detecting an activation of the ignition switch;
detecting a current condition of the machine with each of the plurality of sensing devices in response to detecting an activation of the ignition switch;
comparing the result of each detected condition to a corresponding threshold;
displaying, in response to detecting an activation of the ignition switch, the result of each detected condition on the display monitor relative to the threshold; and
providing an acknowledgement button on the display monitor in response to comparing the result of each detected condition, wherein triggering of the acknowledgement button confirms a review of the displayed result of each detected condition;
restricting further activation of the ignition switch until the acknowledgement button is triggered; and
wherein further activation of the ignition switch is required to start the machine after the acknowledgement button is triggered.

2. The method of claim 1, further comprising displaying the result of each detected condition and the acknowledgement button on a single screen on the display monitor.

3. The method of claim 1 or 2, wherein the displaying step comprises displaying diagnostic trouble-shooting codes on the display monitor.

4. The method of claim 1, 2, or 3, further comprising:
detecting an active diagnostic trouble-shooting code with one of the plurality of sensing devices;
displaying the active diagnostic trouble-shooting code on the display monitor; and
storing the diagnostic trouble-shooting code within a memory unit of the controller.

5. The method of any preceding claim, further comprising:
triggering an alert when one detected condition does not satisfy its corresponding threshold; and
displaying the diagnostic symbol on the display monitor when the alert is triggered.

6. The method of any preceding claim, further comprising:
determining fluid quality based on its density, dielectric, and viscosity;
comparing the fluid density, dielectric, and viscosity to a first threshold and a second threshold; and
displaying the current fluid level and quality in a single screen on the display monitor;
wherein, the fluid quality is displayed on the display monitor in the form of a first visual indicator, a second visual indicator, and a third visual indicator, where the first visual indicator corresponds to satisfying the first and second thresholds, the second visual indicator corresponds to satisfying only one of the first and second thresholds, and the third visual indicator corresponds to satisfying neither the first nor second thresholds.

7. The method of any preceding claim, further comprising:
measuring a plurality of different current conditions of the machine detected with each of the plurality of sensing devices;
electrically communicating the result of each condition with the controller;
comparing the result of each of the plurality of different current conditions with a threshold;
displaying each result on the display monitor, where each result is displayed in a single screen and is shown relative to the threshold.

8. The method of claim 7, further comprising:
measuring a current fluid level relative to a minimum level and maximum level;
measuring a current fluid quality based on its density, dielectric, and viscosity;
comparing the current fluid density, dielectric, and viscosity to a first threshold and a second threshold; and
displaying the current fluid level relative to the minimum and maximum levels and the current fluid quality relative to the first threshold and second threshold, where the fluid level and fluid quality results are shown in a single screen on the display monitor;
wherein, the current fluid quality is displayed in the form of a first visual indicator, a second visual indicator, and a third visual indicator, where the first visual indicator corresponds to satisfying the first and second thresholds, the second visual indicator corresponds to satisfying only one of the first and second thresholds, and the third visual indicator corresponds to satisfying neither the first nor second thresholds.

9. The method of claim 7 or 8, wherein the displaying step comprises displaying diagnostic trouble-shooting codes on the display monitor.

10. The method of claim 7, 8, or 9, further comprising:
detecting an active diagnostic trouble-shooting code with one of the plurality of sensing devices;
displaying the active diagnostic trouble-shooting code on the display monitor; and
storing the diagnostic trouble-shooting code within a memory unit of the controller.

11. The method of any of claims 7-10, further comprising:
triggering an alert when at least one result does not satisfy its corresponding threshold; and
displaying a diagnostic symbol on the display monitor when the alert is triggered.

12. The method of any of claims 7-11, further comprising disabling the engine from igniting when at least one of the detected conditions does not satisfy its corresponding threshold.

13. A machine, comprising:
a frame and an engine coupled to the frame;
a ground-engaging mechanism positioned to support the frame;
a cab coupled to the frame, the cab including a display monitor for operating the machine and an ignition control for starting the engine, where the display monitor is configured to display a maintenance check screen;
a controller disposed in electrical communication with the monitor and ignition control; and
a plurality of sensing devices electrically coupled to the controller, where each of the plurality of sensing devices is configured to detect a fluid level, fluid condition, or a diagnostic condition of the machine;
an acknowledgement button and an activation button, the acknowledgement button being operable once the output signals are displayed on the maintenance check screen and the activation button configured to activate an automatic greasing function;
wherein, upon activation of the ignition control, the controller automatically receives signals from each of the plurality of sensing devices and sends output signals to the display monitor;
further wherein, the display monitor is structured to display each of the output signals on the maintenance check screen, wherein the acknowledgement button is operable once the output signals are displayed on the maintenance check screen and the ignition control is inoperative once the acknowledgement button is operable and has not been triggered.

14. The machine of claim 13, wherein the maintenance check screen is structured to display:
a plurality of gauge indicators for providing a visual indication of at least diesel fuel level, engine oil level, engine coolant level, and hydraulic oil level;
a plurality of visual indicators for indicating the current density, dielectric and viscosity for at least diesel fuel, engine oil, engine coolant level, and hydraulic oil level;
a display of any active diagnostic trouble-shooting codes and any stored diagnostic trouble-shooting codes;
a plurality of diagnostic alerts configured to display at least one of two states, a first state being indicative of a satisfactory condition and a second state being indicative of an unsatisfactory state.

## Patentansprüche

1. Verfahren zur automatischen Durchführung von Wartungskontrollen an einer Arbeitsmaschine, umfassend:
Bereitstellen eines Anzeigemonitors in einer Fahrerkabine der Maschine, eines Zündschalters zum Starten der Maschine, mehreren Sensorvorrichtungen und einer Steuereinheit zum Steuern der Maschine;
Erfassen einer Betätigung des Zündschalters;
Erfassen einer aktuellen Bedingung der Maschine mit jeder der mehreren Sensorvorrichtungen als Reaktion auf das Erfassen einer Betätigung des Zündschalters;
Vergleichen des Ergebnisses von jeder erfassten Bedingung mit einem entsprechenden Schwellenwert;
Anzeigen des Ergebnisses jeder erfassten Bedingung auf dem Anzeigemonitor relativ zu dem Schwellenwert als Reaktion auf das Erfassen einer Betätigung des Zündschalters; und
Bereitstellen einer Bestätigungsschaltfläche auf dem Anzeigemonitor als Reaktion auf das Vergleichen des Ergebnisses jeder erfassten Bedingung, wobei das Auslösen der Bestätigungsschaltfläche eine Überprüfung des angezeigten Ergebnisses jeder erfassten Bedingung bestätigt;
Einschränken der weiteren Betätigung des Zündschalters, bis die Bestätigungsschaltfläche ausgelöst worden ist; und
wobei zum Starten der Maschine nach Auslösen der Bestätigungsschaltfläche eine weitere Betätigung des Zündschalters erforderlich ist.

2. Verfahren nach Anspruch 1, das ferner das Anzeigen des Ergebnisses jeder erfassten Bedingung und der Bestätigungsschaltfläche auf einem einzelnen Bildschirm auf dem Anzeigemonitor umfasst.

3. Verfahren nach Anspruch 1 oder 2, wobei der Anzeigeschritt das Anzeigen von Diagnose-Störungssuchcodes auf dem Anzeigemonitor umfasst.

4. Verfahren nach Anspruch 1, 2 oder 3, ferner umfassend:
Erfassen eines aktiven Diagnose-Störungssuchcodes mit einer der mehreren Sensorvorrichtungen;
Anzeigen des aktiven Diagnose-Störungssuchcodes auf dem Anzeigemonitor; und
Speichern des Diagnose-Störungssuchcodes in einer Speichereinheit der Steuereinheit.

5. Verfahren nach einem der vorhergehenden Ansprüche, ferner umfassend:
Auslösen einer Warnung, wenn eine erfasste Bedingung ihren entsprechenden Schwellenwert nicht erfüllt; und
Anzeigen des Diagnosesymbols auf dem Anzeigemonitor, wenn der Alarm ausgelöst wird.

6. Verfahren nach einem der vorhergehenden Ansprüche, ferner umfassend:
Bestimmen von Qualität eines Fluids auf Basis seiner Dichte, seines Dielektrikums und seiner Viskosität;
Vergleichen von Dichte, Dielektrikum und Viskosität des Fluids mit einem ersten Schwellenwert und einem zweiten Schwellenwert; und
Anzeigen des bzw. der aktuellen Fluidstands und -qualität in einem einzelnen Bildschirm auf dem Anzeigemonitor;
wobei die Fluidqualität auf dem Anzeigemonitor in der Form eines ersten optischen Anzeigers, eines zweiten optischen Anzeigers und eines dritten optischen Anzeigers angezeigt wird, wobei der erste optische Indikator dem Erfüllen des ersten und des zweiten Schwellenwerts entspricht, der zweite optische Anzeiger dem Erfüllen von nur einem von dem ersten und dem zweiten Schwellenwert entspricht und der dritte optische Anzeiger dem Erfüllen von weder dem ersten noch dem zweiten Schwellenwert entspricht.

7. Verfahren nach einem der vorhergehenden Ansprüche, ferner umfassend:
Messen von mehreren verschiedenen aktuellen Bedingungen der Maschine, die mit jeder der mehreren Sensorvorrichtungen erfasst werden;
elektrisches Übermitteln des Ergebnisses jeder Bedingung an die Steuereinheit;
Vergleichen des Ergebnisses von jeder der mehreren verschiedenen aktuellen Bedingungen mit einem Schwellenwert;
Anzeigen jedes Ergebnisses auf dem Anzeigemonitor, wo jedes Ergebnis in einem einzelnen Bildschirm angezeigt wird und relativ zu dem Schwellenwert gezeigt wird.

8. Verfahren nach Anspruch 7, ferner umfassend:
Messen eines aktuellen Fluidstands relativ zu einem Mindeststand und einem Höchststand;
Messen einer aktuellen Qualität eines Fluids auf Basis seiner Dichte, seines Dielektrikums und seiner Viskosität;
Vergleichen der bzw. des aktuellen Dichte, Dielektrikum(s) und Viskosität des Fluids mit einem ersten Schwellenwert und einem zweiten Schwellenwert; und
Anzeigen des aktuellen Fluidstands relativ zu dem Mindest- und Höchststand und der aktuellen Fluidqualität relativ zu dem ersten Schwellenwert und dem zweiten Schwellenwert, wobei die Fluidstand- und Fluidqualitätsergebnisse in einem einzelnen Bildschirm auf dem Anzeigemonitor gezeigt werden;
wobei die aktuelle Fluidqualität in der Form eines ersten optischen Anzeigers, eines zweiten optischen Anzeigers und eines dritten optischen Anzeigers angezeigt wird, wobei der erste optische Anzeiger dem Erfüllen des ersten und des zweiten Schwellenwerts entspricht, der zweite optische Anzeiger dem Erfüllen von nur einem von dem ersten und dem zweiten Schwellenwert entspricht und der dritte optische Anzeiger dem Erfüllen von weder dem ersten noch dem zweiten Schwellenwert entspricht.

9. Verfahren nach Anspruch 7 oder 8, wobei der Anzeigeschritt das Anzeigen von Diagnose-Störungssuchcodes auf dem Anzeigemonitor umfasst.

10. Verfahren nach Anspruch 7, 8 oder 9, ferner umfassend:
Erfassen eines aktiven Diagnose-Störungssuchcodes mit einer der mehreren Sensorvorrichtungen;
Anzeigen des aktiven Diagnose-Störungssuchcodes auf dem Anzeigemonitor; und
Speichern des Diagnose-Störungssuchcodes in einer Speichereinheit der Steuereinheit.

11. Verfahren nach einem der Ansprüche 7 bis 10, ferner umfassend:
Auslösen einer Warnung, wenn wenigstens ein Ergebnis seinen entsprechenden Schwellenwert nicht erfüllt; und
Anzeigen eines Diagnosesymbols auf dem Anzeigemonitor, wenn die Warnung ausgelöst wird.

12. Verfahren nach einem der Ansprüche 7 bis 11, ferner umfassend das Deaktivieren der Zündung des Motors, wenn wenigstens eine der erfassten Bedingungen ihren entsprechenden Schwellenwert nicht erfüllt.

13. Maschine, umfassend:
einen Rahmen und einen mit dem Rahmen gekoppelten Motor;
einen zum Tragen des Rahmens positionierten Bodeneingriffsmechanismus;
eine mit dem Rahmen gekoppelte Fahrerkabine, wobei die Fahrerkabine einen Anzeigemonitor zum Bedienen der Maschine und ein Zündungssteuerelement zum Starten des Motors beinhaltet, wobei der Anzeigemonitor zum Anzeigen eines Wartungskontrollbildschirms konfiguriert ist;
eine Steuereinheit, die in elektrischer Verbindung mit dem Monitor und dem Zündungssteuerelement konfiguriert ist; und
mehrere Sensorvorrichtungen, die elektrisch mit der Steuereinheit gekoppelt sind, wobei jede der mehreren Sensorvorrichtungen zum Erfassen eines Fluidstands, einer Fluidbedingung oder einer Diagnosebedingung der Maschine konfiguriert ist;
eine Bestätigungsschaltfläche und eine Aktivierungsschaltfläche, wobei die Bestätigungsschaltfläche funktionsfähig ist, sobald die Ausgangssignale auf dem Wartungskontrollbildschirm angezeigt werden, und die Aktivierungsschaltfläche zum Aktivieren einer automatischen Schmierfunktion konfiguriert ist;
wobei die Steuereinheit bei Aktivierung des Zündungssteuerelements automatisch Signale von jeder der mehreren Sensorvorrichtungen empfängt und Ausgangssignale an den Anzeigemonitor sendet;
ferner wobei der Anzeigemonitor zum Anzeigen von jedem der Ausgangssignale auf dem Wartungskontrollbildschirm aufgebaut ist, wobei die Bestätigungsschaltfläche funktionsfähig ist, sobald die Ausgangssignale auf dem Wartungskontrollbildschirm angezeigt werden, und das Zündungssteuerelement funktionsunfähig ist, sobald die Bestätigungsschaltfläche funktionsfähig ist und nicht ausgelöst worden ist.

14. Maschine nach Anspruch 13, wobei der Wartungskontrollbildschirm strukturiert ist, um Folgendes anzuzeigen:
mehrere Messgerätanzeiger zum Bereitstellen einer optischen Anzeige von wenigstens Dieselkraftstoffstand, Motorölstand, Motorkühlmittelstand und Hydraulikölstand;
mehrere optische Anzeiger zum Anzeigen des bzw. der aktuellen Dichte, Dielektrikums und Viskosität für wenigstens Dieselkraftstoff, Motoröl, Motorkühlmittelstand und Hydraulikölstand;
eine Anzeige jedweder aktiver Diagnose-Störungssuchcodes und jedweder gespeicherter Diagnose-Störungssuchcodes;
eine Vielzahl von Diagnose-Warnungen, die zum Anzeigen von wenigstens einem von zwei Zuständen konfiguriert sind, wobei ein erster Zustand für eine zufriedenstellende Bedingung bezeichnend ist und ein zweiter Zustand für einen nicht zufriedenstellenden Zustand bezeichnend ist.

## Revendications

1. Procédé destiné à effectuer automatiquement des contrôles d'entretien sur une machine de travail, comprenant :
fournir un moniteur d'affichage dans une cabine de la machine, un contacteur d'allumage pour mettre la machine en marche, une pluralité de dispositifs de détection et un contrôleur pour contrôler la machine ;
détecter une activation du contacteur d'allumage ;
détecter une condition courante de la machine avec chacun de la pluralité de dispositifs de détection en réponse à la détection d'une activation du contacteur d'allumage ;
comparer le résultat de chaque condition détectée à un seuil correspondant ;
afficher, en réponse à la détection d'une activation du contacteur d'allumage, le résultat de chaque condition détectée sur le moniteur d'affichage par rapport au seuil ; et
fournir un bouton d'acquittement sur le moniteur d'affichage en réponse à la comparaison du résultat de chaque condition détectée, dans lequel déclencher le bouton d'acquittement confirme une visualisation du résultat affiché de chaque condition détectée ;
restreindre une activation ultérieure du contacteur d'allumage jusqu'à ce que le bouton d'acquittement soit déclenché ; et
dans lequel une activation ultérieure du contacteur d'allumage est requise pour mettre la machine en marche après que le bouton d'acquittement a été déclenché.

2. Procédé selon la revendication 1, comprenant en outre afficher le résultat de chaque condition détectée et le bouton d'acquittement sur un seul écran du moniteur d'affichage.

3. Procédé selon la revendication 1 ou 2, dans lequel l'étape d'affichage comprend afficher des codes de diagnostic de dépistage d'anomalies sur le moniteur d'affichage.

4. Procédé selon la revendication 1, 2 ou 3, comprenant en outre :
détecter un code de diagnostic actif de dépistage d'anomalies avec l'un de la pluralité de dispositifs de détection ;
afficher le code de diagnostic actif de dépistage d'anomalies sur le moniteur d'affichage ; et
stocker le code de diagnostic de dépistage d'anomalies dans une unité de mémoire du contrôleur.

5. Procédé selon l'une quelconque des revendications précédentes, comprenant en outre :
déclencher une alerte lorsqu'une condition détectée ne satisfait pas à son seuil correspondant ; et
afficher le symbole de diagnostic sur le moniteur d'affichage lorsque l'alerte est déclenchée.

6. Procédé selon l'une quelconque des revendications précédentes, comprenant en outre :
déterminer une qualité de fluide sur la base de sa densité, de son diélectrique et de sa viscosité ;
comparer la densité, le diélectrique et la viscosité du fluide à un premier seuil et à un deuxième seuil ; et
afficher le niveau et la qualité de fluide courant sur un seul écran du moniteur d'affichage ;
dans lequel, la qualité de fluide est affichée sur le moniteur d'affichage sous la forme d'un premier indicateur visuel, d'un deuxième indicateur visuel et d'un troisième indicateur visuel, dans lequel le premier indicateur visuel correspond au fait de satisfaire au premier et le deuxième seuil, le deuxième indicateur visuel correspond au fait de satisfaire seulement à l'un du premier et du deuxième seuil, et le troisième indicateur visuel correspond au fait de ne satisfaire ni au premier ni au deuxième seuil.

7. Procédé selon l'une quelconque des revendications précédentes, comprenant en outre :
mesurer une pluralité de différentes conditions courantes de la machine détectées avec chacun de la pluralité de dispositifs de détection ;
communiquer électriquement le résultat de chaque condition au contrôleur ;
comparer le résultat de chacune de la pluralité de différentes conditions courantes à un seuil ;
afficher chaque résultat sur le moniteur d'affichage, où chaque résultat est affiché sur un seul écran et est montré par rapport au seuil.

8. Procédé selon la revendication 7, comprenant en outre :
mesurer un niveau de fluide courant par rapport à un niveau minimum et à un niveau maximum ;
mesurer une qualité de fluide courant sur la base de sa densité, de son diélectrique et de sa viscosité ;
comparer la densité, le diélectrique et la viscosité de fluide courant à un premier seuil et à un deuxième seuil ; et
afficher le niveau de fluide courant par rapport à des niveaux minimum et maximum et la qualité de fluide courant par rapport au premier seuil et au deuxième seuil, dans lequel les résultats de niveau de fluide et de qualité de fluide sont montrés sur un seul écran du moniteur d'affichage ;
dans lequel la qualité de fluide courant est affichée sous la forme d'un premier indicateur visuel, d'un deuxième indicateur visuel et d'un troisième indicateur visuel, dans lequel le premier indicateur visuel correspond au fait de satisfaire au premier et au deuxième seuil, le deuxième indicateur visuel correspond au fait de satisfaire seulement à l'un du premier et du deuxième seuil, et le troisième indicateur visuel correspond au fait de ne satisfaire ni au premier ni au deuxième seuil.

9. Procédé selon la revendication 7 ou 8, dans lequel l'étape d'affichage comprend afficher des codes de diagnostic de dépistage d'anomalies sur le moniteur d'affichage.

10. Procédé selon la revendication 7, 8 ou 9, comprenant en outre :
détecter un code de diagnostic actif de dépistage d'anomalies avec l'un de la pluralité de dispositifs de détection ;
afficher le code de diagnostic actif de dépistage d'anomalie sur le moniteur d'affichage ; et
stocker le code de diagnostic de dépistage d'anomalie dans une unité de mémoire du contrôleur.

11. Procédé selon l'une quelconque des revendications 7-10, comprenant en outre :
déclencher une alerte lorsque au moins un résultat ne satisfait pas à son seuil correspondant ; et
afficher un symbole de diagnostic sur le moniteur d'affichage lorsque l'alerte est déclenchée.

12. Procédé selon l'une quelconque des revendications 7-11, comprenant en outre déconnecter le moteur de l'allumage lorsque au moins l'une des conditions détectées ne satisfait pas à son seuil correspondant.

13. Machine, comprenant :
un châssis et un moteur couplé au châssis ;
un mécanisme d'engagement au sol positionné pour soutenir le châssis ;
une cabine couplée au châssis, la cabine comprenant un moniteur d'affichage pour faire fonctionner la machine et une commande d'allumage pour mettre le moteur en marche, dans laquelle le moniteur d'affichage est configuré pour afficher un écran de contrôles d'entretien ;
un contrôleur disposé en communication électrique avec le moniteur et la commande d'allumage ; et
une pluralité de dispositifs de détection couplés électriquement au contrôleur, dans laquelle chacun de la pluralité de dispositifs de détection est configuré pour détecter un niveau de fluide, une condition de fluide ou une condition de diagnostic de la machine ;
un bouton d'acquittement et un bouton d'activation, le bouton d'acquittement étant opérationnel une fois que les signaux de sortie sont affichés sur l'écran de contrôles d'entretien et le bouton d'activation est configuré pour activer une fonction de graissage automatique ;
dans laquelle, lors de l'activation de la commande d'allumage, le contrôleur reçoit automatiquement des signaux de chacun de la pluralité de dispositifs de détection et envoie des signaux de sortie au moniteur d'affichage ;
dans laquelle en outre, le moniteur d'affichage est structuré pour afficher chacun des signaux de sortie sur l'écran de contrôles d'entretien, dans laquelle le bouton d'acquittement est opérationnel une fois que les signaux de sortie sont affichés sur l'écran de contrôles d'entretien et la commande d'allumage est non opérationnelle une fois que le bouton d'acquittement est opérationnel et n'a pas été déclenché.

14. Machine selon la revendication 13, dans laquelle l'écran de contrôles d'entretien est structuré pour afficher :
une pluralité d'indicateurs de jauge pour fournir une indication visuelle d'au moins le niveau de carburant diesel, le niveau d'huile moteur, le niveau de réfrigérant moteur et le niveau d'huile hydraulique ;
une pluralité d'indicateurs visuels pour indiquer la densité, le diélectrique et la viscosité courantes pour au moins le carburant diesel, l'huile moteur, le niveau de réfrigérant moteur et le niveau d'huile hydraulique ;
un affichage de codes de diagnostic actifs quelconques de dépistage d'anomalies et de codes de diagnostic stockés quelconques de dépistage d'anomalies ;
une pluralité d'alertes de diagnostic configurées pour afficher au moins l'un de deux états, un premier état étant indicatif d'une condition satisfaisante et un deuxième état étant indicatif d'un état insatisfaisant.
